# EUROPÄISCHE PATENTSCHRIFT

(11) **EP 2 158 872 B1**
(45) Veröffentlichungstag und Bekanntmachung des Hinweises auf die Patenterteilung: **22.06.2016**
(21) Anmeldenummer: 08015418.0
(22) Anmeldetag: 01.09.2008
(51) Int. Cl.: A61C 17/22, A46B 9/04, A46B 9/06, A46B 15/00

(54) **Mundpflegeeinrichtung mit einem Funktionselement und Verfahren zu dessen Herstellung**
Mouth cleaning device with a function element and method for its manufacture
Dispositif de soin de la bouche doté d'un élément de fonctionnement et son procédé de fabrication

(43) Veröffentlichungstag der Anmeldung: 03.03.2010
(73) Patentinhaber: Braun GmbH, 61476 Kronberg (DE)
(72) Erfinder: Stief, Christian, 60314 Frankfurt (DE); Haas, Martin, 65760 Eschborn (DE); Störkel, Jens, 60433 Frankfrt/Main (DE); Rähse, Steffi, 65760 Eschborn (DE); Hustedt, Siegfried, 65812 Bad Soden (DE)
(74) Vertreter: Töpert, Verena Clarita

(56) Entgegenhaltungen:
- US-A1- 2004 154 112
- US-A1- 2005 050 659
- US-A1- 2005 229 339

## Beschreibung

Die vorliegende Erfindung betrifft eine Mundpflegeeinrichtung mit den Merkmalen des Oberbegriffs des Anspruchs 1 und ein Verfahren zu dessen Herstellung.

Aus dem Stand der Technik sind verschiedene Mundpflegeeinrichtungen, die insbesondere als Zahnbürsten ausgebildet sind, bekannt, die ein elektrisch betreibbares Funktionselement, wie z. B. eine Licht aussendende LED aufweisen. Hierbei wird angestrebt, die LED innerhalb des Zahnbürstenkopfes anzuordnen, damit dieses elektrisch betreibbare Funktionselement vollständig in den Zahnbürstenkunststoff eingekapselt ist und somit keine Probleme mit der Feuchtigkeit am Zahnbürstenkopf und der Elektrik gegeben sind.

Aus der WO 2008/059435 ist eine Mundpflegeeinrichtung bekannt. Hierbei ist als elektrisch betreibbares Funktionselement eine LED im Zahnbürstenborstenfeld vorgesehen, die an einer Außenfläche des Kopfes im Borstenfeld vorspringend angeordnet ist. Das Bestreben, das Funktionselement so nah als möglich an den zu reinigenden Zähnen anzuordnen, kann jedoch zu Handhabungsproblemen bei der Mundpflege führen.

Aus der WO 2005/115196 A2 ist eine Mundpflegeeinrichtung für eine elektrische Zahnbürste bekannt, bei der mittig im Borstenfeld ein Elastomerelement in Topfform mit einer geschlossenen umlaufenden Wandung vorgesehen ist. Dieses bekannte Elastomerelement ist vorgesehen, um innerhalb der Wandungen Zahnpasta anzusammeln und so eine erhöhte Pollierwirkung der Zahnpasta auf der Zahnoberfläche zu erreichen.

Aus der US-A1-2005/0229339 ist ein elektrisch betreibbares Zahnbürstenfeld einer Mundpflegeeinrichtung bekannt, dass Borsten und Elastomere als Reinigungselement aufweist.

Aus der US-A1-2005/0050659 ist eine Mundpflegeeinrichtung der eingangs genannten Art bereits bekannt. Hierbei werden benachbart zum Funktionselement ein oder zwei Elastomerelemente vorgesehen.

Es ist eine Aufgabe der vorliegenden Erfindung, ein Verfahren und eine Mundpflegeeinrichtung der eingangs genannten Art bereitzustellen, die eine Anordnung des elektrisch betreibbaren Funktionselementes am Kopf möglichst nahe an der Mundpflegestelle, wie z. B. den Zähnen oder der Zunge ermöglicht und andererseits eine sichere und komfortable Handhabung gewährleistet.

Diese Aufgabe wird durch eine Mundpflegeeinrichtung mit den Merkmalen des Anspruchs 1 gelöst.

Durch die Ausbildung eines Elastomerelementes direkt benachbart zum Funktionselement wird gewährleistet, dass an der Außenfläche des Kopfes angeordnete Funktionselemente auch dann nicht als störend empfunden werden, wenn die biegbaren Mundpflegeelemente, wie z. B. Reinigungsborsten, die Distanz zwischen der Außenfläche des Kopfes bzw. dem Funktionselement und dem Zahn während der Zahnreinigung oder relativ zur Zunge verringern. Bei übermäßigem Andrücken der Zahnbürste auf die Zähne kann so vermieden werden, dass je nach verwendeter Putztechnik des Benutzers ein Einsinken im Borstenfeld und mitunter ein als nachteilig wahrgenommenes Berühren der Oberfläche des Funktionselementes durch die Zähne während des Putzvorgangs erfolgt. Die Abstützung durch die Mundpflegeelemente an sich ist zudem dann besonders gering, wenn oberhalb des Funktionselementes ein Freibereich vorgesehen ist, so dass ein leichteres Einsinken bei stärkerem Andrücken der Zahnbürste gegen die Zähne möglich ist. Weiterhin ist durch die erfindungsgemäße Ausbildung ermöglicht, dass das elektrisch betreibbare Funktionselement nah an den zu reinigenden Zähnen (oder der Zunge) angeordnet und gleichzeitig die Dicke des Kopfes, der die Mundpflegeelemente trägt, möglichst gering gehalten ist. Damit nimmt die Zahnbürste auch weiterhin einen geringen Raum zwischen Backeninnenwand und Zahnaußenfläche ein, so dass eine komfortable Handhabung gewährleistet ist.

Erfindungsgemäß ist das Elastomerelement als umlaufende Wandung um das Funktionselement ausgebildet. Somit ist eine gleichmäßige Abstützung über den gesamten Umfang des Funktionselementes herum durch die Wandung des Elastomerelementes gegeben. Die Ausbildung des Elastomerelementes als umlaufende Wandung erlaubt eine einfachere Herstellbarkeit und eine Kraftaufnahme innerhalb des Elastomerelementes durch benachbarte Wandungsabschnitte.

Erfindungsgemäß sind zumindest vier Elastomerelemente seitlich neben dem Funktionselement angeordnet. Beispielsweise können die Elastomerelemente als vier Halbschalen oder vier z. B. rechteckig geformte Elastomerelemente ausgebildet sein, die beidseits direkt benachbart zum Funktionselement angeordnet sind und so auch eine ausreichende Abstützwirkung ermöglichen, wobei durch die Unterbrechung zwischen den vier Elastomerelementen ein Spalt gebildet ist, über den Flüssigkeit oder Zahnpasta, die sich auf dem Funktionselement ablagern könnte, sofort abfließt. Statt vier Elastomerelementen können auch fünf, sechs, sieben oder mehr Elastomerelemente um das Funktionselement herum angeordnet sein. Diese Elastomerelemente sind im wesentlichen unabhängig voneinander bewegbar oder zumindest im Endbereich biegbar ausgebildet und weisen erfindungsgemäß einen gemeinsamen Sockelbereich z.B. benachbart zum Kopf oder im Kopf auf.

In weiterer vorteilhafter Ausbildung weist die umlaufende Wandung auf der Höhe des Funktionselementes seitliche Aussparungen auf. Dadurch dass auf der Höhe des Funktionselementes die Aussparungen vorgesehen sind, ist sichergestellt, dass sich innerhalb des Elastomerelementes auf dem Funktionselement keine Zahnpasta ansammelt, sondern dass diese über die seitlichen Aussparungen abfließen kann. Eine geschlossen topfartige Struktur des Elastomerelementes wird daher als nachteilig angesehen.

In weiterer vorteilhafter Ausbildung sind das Funktionselement und das Elastomerelement einstückig ausgebildet. Somit sind das Funktionselement und das Elastomerelement bevorzugt stoffidentisch ausgebildet.

Alternativ sind das Funktionselement und das Elastomerelement aus zwei Werkstoffen aus gebildet.

Erfindungsgemäß weist das Elastomerelement gegenüberliegend zur Außenfläche zumindest vier freigestellte Endungen auf. Die freigestellten Endungen sind z. B. durch eine Wellenstruktur der Endungen bzw. Topographie des Elastomerelementes, durch Einschnitte oder Aussparungen oder unabhängig voneinander bewegliche bzw. verbiegbare Elastomerelemente gebildet. Die freigestellten Endungen können so, je nach Dimensionierung, auf eine bestimmte Nachgiebigkeit eingestellt werden oder auf eine Reinigungswirkung gegenüber den Zähnen oder der Zunge optimiert ausgebildet sein.

In weiterer vorteilhafter Ausbildung ist das Funktionselement benachbart und/oder zwischen den Mundpflegeelementen angeordnet. Somit ist sichergestellt, dass die Eigenschaften des Funktionselementes in der unmittelbaren Umgebung der Mundpflegeelemente zur Wirkung kommen. Alternativ kann das Funktionselement an einer anderen Außenseite des Kopfes angeordnet sein, an der keine Mundpflegeelemente angeordnet sind. Dies könnte beispielsweise für einen Zungenreiniger mit Funktionselement von besonderem Interesse sein.

Das Funktionselement ist als eine lichtaussendende Quelle, insbesondere als eine LED (Light emitting diode), ein Sensor oder ein Aktuator für die Erzeugung von z. B. einem Geräusch, einer Bewegung oder Vibration ausgebildet. Die LED kann beispielsweise als Energielieferant zur Aktivierung einer Substanz in der Zahnpasta verwendet werden. Andere Energie emittierende Funktionselemente sind alternativ einsetzbar. Falls das Funktionselement als Sensor ausgebildet ist, so kommt beispielsweise ein Bewegungssensor in Frage, der die 3D-Bewegung des Kopfes mittels eines Neigungssensors, Geschwindigkeitssensors oder Beschleunigungssensors detektiert. Auch ein Andruckkraftsensor kommt hierfür in Frage.

In weiterer vorteilhafter Ausbildung ist das Funktionselement teilweise im Kopf und teilweise aus diesem vorspringend angeordnet. Das unmittelbar zum Funktionselement benachbarte Elastomerelement verhindert somit, dass beispielsweise ein zu putzender Zahn direkt gegen ein beispielsweise aus Hartkunststoff ausgebildetes Funktionselement anstoßen kann.

In weiterer vorteilhafter Ausbildung ist das Elastomerelement aus thermoplastischem Elastomer und der Kopf, insbesondere die an das Elastomer angrenzenden Bereiche, aus Hartkunststoff wie z. B. PP, POM, Copolyester oder PE ausgebildet.

In weiterer vorteilhafter Ausbildung ist das Funktionselement durch einen Presssitz im Kopf befestigt. Der Außendurchmesser bzw. die Außengeometrie des Funktionselementes ist somit größer als die zu dessen Aufnahme vorgesehene Öffnung im Kopf. Dadurch ist auf einfache Weise eine gegen Flüssigkeit/Feuchtigkeit verkapselnde Lösung gegeben. Andere Arten der Befestigung des Funktionselementes im Kopf beispielsweise durch Umspritzen, Schweißen, Kleben oder Verschnappen sind ebenfalls möglich. Vorzugsweise (aber nicht zwingend) ist das Funktionselement direkt in Kontakt mit dem Hartkunststoff des Kopfes, so dass sich ein fester dauerhafter Presssitz einstellt.

In weiterer vorteilhafter Ausbildung ist die Mundpflegeeinrichtung als eine manuelle oder elektrische Zahnbürste und/oder das Funktionselement als LED ausgebildet, die im Reinigungsbereich vorspringend angeordnet ist. Vorzugsweise ist die LED bzw. das Funktionselement mittig oder in der vorderen Hälfte, also der relativ zum Handgriff abgewandten Kopfhälfte angeordnet. Dies stellt sicher, dass auch die hinteren Backenzähne gut beleuchtet werden können.

Die obige Aufgabe wird hinsichtlich des Verfahrens mit den Merkmalen des Anspruchs 9 gelöst. Erfindungsgemäß wird vorgeschlagen, zuerst den Kopf spritz zu gießen und anschließend das Elastomerelement mit dem Kopf zu verbinden. Zwar stört bei dieser Vorgehensweise das Elastomerelement potentiell bei der anschließenden Beborstung des Kopfes, jedoch stehen dem Vorteile gegenüber, dass der Kopf und das Elastomerelement auf einfache Weise zu fertigen ist. Nach der Beborstung des Kopfes erfolgt die Befestigung des Funktionselementes benachbart zum Elastomerelement.

In vorteilhafter Weiterbildung des Verfahrens wird das Elastomerelement in einem Mehrkomponentenspritzverfahren am Kopf angespritzt.

In einer Variante wird bei diesem Mehrkomponentenspritzverfahren auch das Funktionselement mit umspritzt. Die Beborstung folgt dann darauf.

In weiterer vorteilhafter Fortbildung des Verfahrens wird unmittelbar nach der Beborstung und vor der Befestigung des Funktionselementes eine Gruppe von Borstenbüscheln seitlich weg gebogen, und eine andere Gruppe von Borstenbüscheln in der Länge zugeschnitten und/oder endverrundet. Das während des Schneidvorganges erfolgende Wegbiegen der befestigten Borstenbüscheln relativ zu anderen erfolgt mittels Verdrängerschienen, so dass die nicht verdrängten Borstenbüschel sicher in ihren Endabschnitten in jeder beliebigen Form weiterbehandelt werden können. Diese Vorgehensweise führt zu Schwierigkeiten bezüglich des bereits mit dem Kopf verbundenen Elastomerelementes, so dass dieses derart ausgebildet ist, dass es nicht den Einsatz der Verdrängerschienen behindert.

In weiterer Fortbildung des Verfahrens ist das Funktionselement mittels einer Presspassung im Kopf befestigt, wobei bevorzugt das Funktionselement im Hartkunststoff des Kopfes befestigt wird. Alternativ wird das Funktionselement im Weichkunststoff z. B. des Elastomerelementes befestigt.

Weitere Ziele, Vorteile und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in Ansprüchen oder deren Rückbeziehung. Es zeigen:
- Fig. 1: eine perspektivische Darstellung des Kopfes mit Halsabschnitt einer Mundpflegeeinrichtung gemäß einer Ausführungsform der Erfindung,
- Fig. 2: eine vergrößerte perspektivische Darstellung des Kopfes gemäß Fig. 1
- Fig. 3: eine Draufsicht auf den Kopf der Mundpflegeeinrichtung nach Fig. 1,
- Fig. 4: eine Längsschnittdarstellung entlang der Linie A-A in Fig. 3,
- Fig. 5: eine Querschnittsdarstelllung durch den Kopf entlang der Linie C-C in Fig. 3,
- Fig. 6: eine perspektivische Darstellung des Elastomerelementes der Mundpflegeeinrichtung nach Fig. 1,
- Fig. 7: eine Draufsicht auf das Elastomerelement nach Fig. 6,
- Fig. 8: eine Seitenansicht auf das Elastomerelement nach Fig. 6,
- Fig. 9: eine Vorderansicht auf das Elastomerelement nach Fig. 6 und
- Fig. 10: eine Längsschnittdarstellung durch einen Kopf einer Mundpflegeeinrichtung mit elektrisch betreibbarem Funktionselement nach Fig. 1.

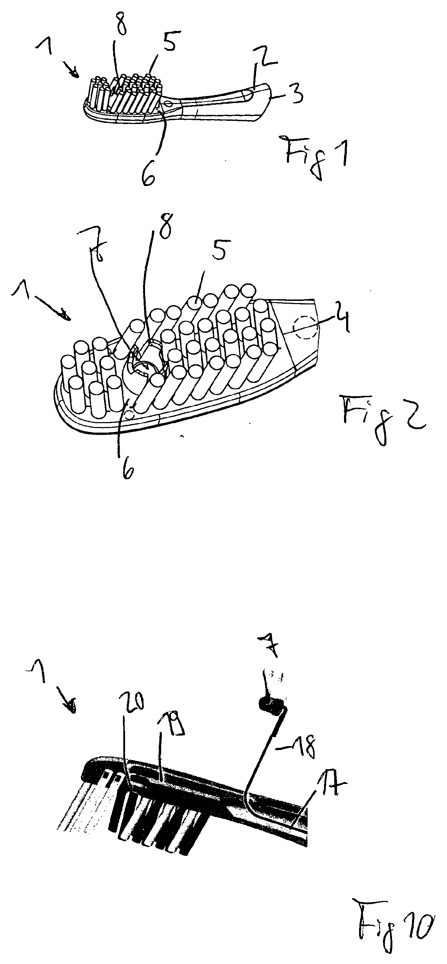

Fig. 1 zeigt eine perspektivische Draufsicht auf den Kopf einer Mundpflegeeinrichtung, die gemäß dieser Ausführungsform Teil einer manuellen Zahnbürste ist. Fig. 2 zeigt eine etwas vergrößerte perspektivische Darstellung auf den Kopf der Mundpflegeeinrichtung nach Fig. 1. In beiden Figuren 1 und 2 wie auch in den folgenden Figuren sind die übrigen Bestandteile der Zahnbürste nicht dargestellt, aber wie aus dem Stand der Technik bekannt vorgesehen. An den Kopf 1, der an einer Oberseite ein Borstenfeld zur Zahnreinigung aufweist, schließt sich ein Halsabschnitt 2 an. An der Abrisslinie 3 in Fig. 1 schließt sich an den Halsabschnitt ein Handgriff an, in dem elektrische Leitungen zum Betreiben eines elektrischen Funktionselementes verlegt sind. Ferner sind im Handgriff ein Ein-/Ausschalter, eine Stromversorgung und sonstige elektrische Einrichtungen vorgesehen, die zum Betreiben des elektrischen Funktionselementes notwendig sind. Als Mundpflegeelemente sind für diese Ausführungsform Büschel von Reinigungsborsten 5 vorgesehen, die in jeder bekannten Art und Weise im Kopf 1 befestigbar sind. Gemäß der vorliegenden Ausführungsform werden die Büschel von Reinigungsborsten nach dem Ankerbestopfungsverfahren im Kopf verankert. Andere Mundpflegeinstrumente, wie z. B. Reinigungselastomerelemente, die im Kopf befestigt oder angespritzt sind, können alternativ oder ergänzend vorgesehen sein. Die Außenfläche 6 des Kopfes, an der die Mundpflegeelemente befestigbar sind, weist bevorzugt in der vorderen Kopfhälfte bzw. im vorderen Drittel des distalen Endes des Kopfes 1 das Funktionselement 7 und das um das Funktionselement angeordnete Elastomerelement 8 auf. Sowohl das Funktionselement 7 als auch das Elastomerelement 8 sind gegenüber der Außenfläche in Richtung der Borstenenden hin vorspringend ausgebildet. In einer alternativen Ausführungsform sind das Elastomerelement und das Funktionselement in einer anderen Fläche angeordnet, in der keine Zahnreinigungsborsten 5 angeordnet sind. Dies könnte beispielsweise die Rückseite oder Seite des Kopfes 1 sein. Die Außenfläche 6 ist im vorliegenden Fall eine einheitlich plane Fläche, die Öffnungen aufweist, um darin die Mundpflegeelemente vorzusehen. Gemäß der vorliegenden Ausführungsform ist die Außenfläche 6 auch die Bestopfungsfläche für die Borstenbüschel. Alternativ kann die Außenfläche 6 auch eine von der planen Fläche abweichende Topographie aufweisen, wobei stets mit "Außenfläche 6" jedoch die Fläche gemeint ist, in die die Mundpflegeelemente im Kopf 1 benachbart zum Elastomerelement 8 münden bzw. befestigt werden. Als Funktionselement 7 ist gemäß der vorliegenden Ausführungsform eine LED vorgesehen.

Wie in den Figuren 1 und 2 dargestellt, weist die vorliegende Ausführungsform zwei Außenreihen mit Borstenbüscheln auf, die zum Handgriff hin geneigt sind und zwei Innenreihen mit Borstenbüscheln, die zum distalen Ende hin geneigt sind. Eine vordere Borstenbüschelgruppe ist am distalen Ende zur besseren Erreichbarkeit von z. B. Weisheitszähnen vorgesehen. Die Konfiguration von Mundpflegeelementen (z. B. Borstenbüschel) kann beliebig mit dem Elastomerelement und dem Funktionselement variiert und kombiniert werden. Gemäß der vorliegenden Ausführungsform ist das Elastomerelement 8 im vorderen distalen Enddrittel des Kopfes 1 angeordnet und nach allen Seiten von Borstenbüscheln umgeben. Das Funktionselement bzw. die LED 7 wiederum ist vollständig oder alternativ teilweise vom Elastomerelement 8 umgeben.

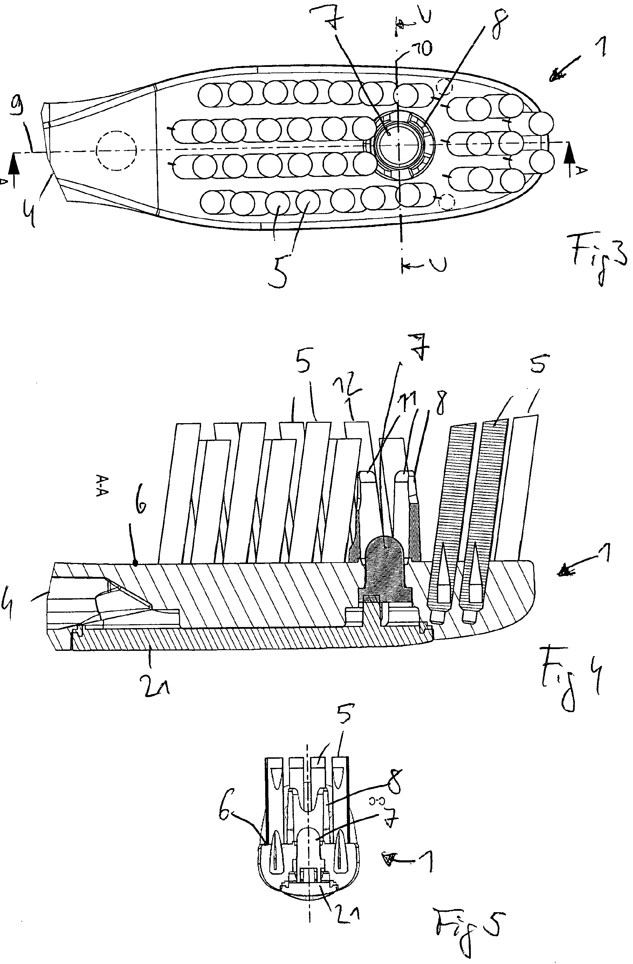

Fig. 3 zeigt eine Draufsicht auf den Kopf 1. Wie aus dieser Figur klar ersichtlich ist, wird die LED 7 von keinen Borstenendungen oder Borstenabschnitten überdeckt, so dass eine ungehinderte Beleuchtung der Zähne möglich ist. Um die LED herum ist ein Freibereich geschaffen, der einen Durchmesser von 2 bis 4 mm aufweist, in dem keine Borsten angeordnet sind. Diese Durchmesserangabe bezieht sich auf die optische Achse der LED bzw. auf eine dazu winklige oder versetzte Achse. Die LED ist im Wesentlichen nach allen Seiten von Reinigungsborsten bzw. Mundpflegeelementen umgeben.

Fig. 4 zeigt eine Längsschnittdarstellung durch den Kopf 1 entlang der Linie A-A in Fig. 3 die der Längsachse 9 entspricht. Die LED ragt bei dieser Ausführungsform 1 bis 3 mm über die plane Außenfläche 6 des Kopfes 1 heraus. Freistehende Endungen 11 des Elastomerelementes 8 überragen die Außenfläche 6 um 5 bis 9 mm, vorzugsweise etwa 6 bis 8 mm. Die längsten am Kopf 1 verwendeten Borsten überragen die Außenfläche vertikal nach oben von der Außenfläche weg zu 10 bis 12 mm, so dass vorzugsweise eine Differenz zwischen den längsten Reinigungsborsten 12 und den freistehenden Endungen 11 zwischen 3 und 5 mm besteht. Diese Differenz ist unabhängig von den obigen Längenbereichen ausbildbar. Somit erfolgt die Zahnreinigung im Wesentlichen durch die Reinigungsborsten, wobei je nach Putztechnik die freien Endungen 11 des Elastomerelementes 8 ebenfalls Reinigungsaufgaben übernehmen können. Damit eine optimale Nachgiebigkeit bzw. Flexibilität des Elastomerelementes 8 gegeben ist, ist dieses bevorzugt in einer Härte von 50 bis 80 Shore A auszubilden. Auch bei stärkerem Andrücken der Borsten gegen die Zähne ist es somit nicht möglich, das Elastomer in seiner Längserstreckung so weit zusammen zu drücken, dass die Zähne in Kontakt mit der LED 7 gelangen.

Fig. 5 zeigt eine Querschnittsdarstellung entlang der Linie 10, bzw. C-C in Fig. 3. Aus beiden Figuren 4 und 5 ist erkennbar, dass ein Fußbereich des Elastomerelementes 8 unmittelbar benachbart zu Borstenbüscheln angeordnet ist. Der Abstand zwischen den zum Elastomerelement nächstliegenden Reinigungsborsten und der Wandung des Elastomerelementes auf Höhe der Außenfläche 6 beträgt zwischen wenigen Zehntel mm und max. 2 mm. Die LED 7 ist in einer Hartkunststofföffnung des Kopfes 1 eingepreßt. Die Abschnitte des Elastomerelementes 8 stehen gemäß dieser Ausführungsform nur in Verbindung mit der Außenfläche 6 und nicht mit der Montageöffnung für die LED, so dass ein fester und dichtender Presssitz zwischen dem Hartkunststoff der LED und dem Hartkunststoff des Kopfes 1 gegeben ist.

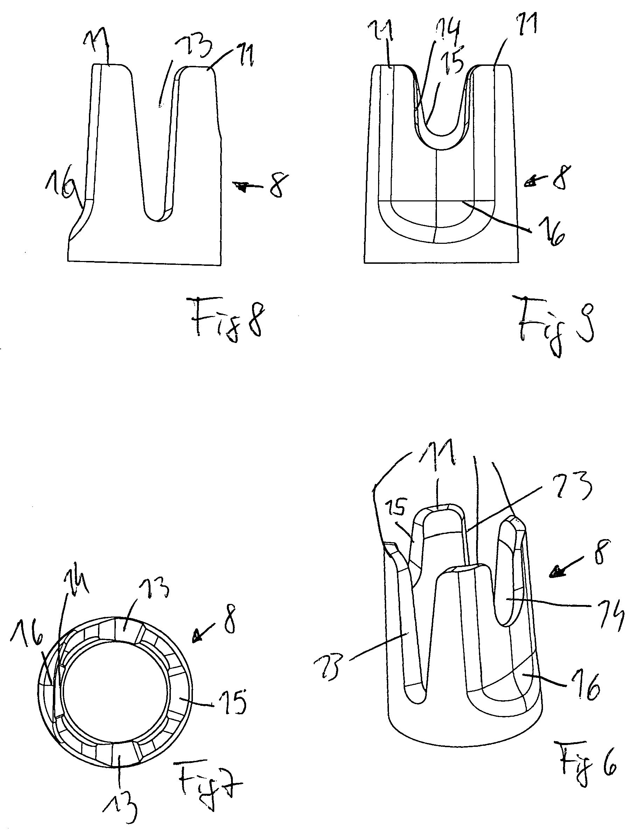

Fig. 6 zeigt eine perspektivische Darstellung des Elastomerelementes 8. Die Fig. 7 zeigt eine Draufsicht auf dieses Elastomerelement und die Fig. 8 eine Vorder- und die Fig. 9 eine Seitenansicht. Das Elastomerlement 8 weist erfindungsgemäß vier freistehende Endungen 11 auf, kann aber auch in Variationen mehr als vier Endungen 11 aufweisen. Die vier freistehenden Endungen 11 sind im Sockelbereich durch eine umlaufende Wandung miteinander verbunden, wobei zwischen den Endungen 11 Einschnitte 13, 14 und 15 vorgesehen sind. Erfindungsgemäß reichen die Einschnitte bzw. Aussparungen bzw. Ausnehmungen 13 tiefer herab als die LED 7 aus der Außenfläche 6 des Kopfes 1 herausragt. Damit ist gewährleistet, dass Flüssigkeit oder Zahnpasta nach zwei Seiten ausfließen kann und die optische Qualität der Abstrahlleistung der LED nicht beeinträchtigt wird. Eine geringe Beeinträchtigung der optischen Qualität der LED Abstrahlleistung wird als unkritisch angesehen. Im allgemeinen wird jedoch angestrebt, das Elastomerelement 8 und die diese umgebenden Geometrien dahingehend zu optimieren, dass sich keine oder keine größeren Flüssigkeits- oder Zahnpastaansammlungen innerhalb des Elastomerelementes 8 und vor allen Dingen auf der LED 7 ansammeln können. Die Aussparungen 13 sind beiderseits seitlich am Elastomerelement 8 als v-förmige Einschnitte ausgebildet. Die Ausnehmung 14 ist um etwa 90° versetzt zwischen den Aussparungen 13 in der Wandung des Elasomerelementes vorgesehen und erlaubt so einerseits einen besseren Lichtaustritt durch diese Öffnung und andererseits eine ausreichende Verbiegbarkeit der Endungen 11 des Elastomerelementes 8. Zum distalen vorderen Ende des Kopfes hin ist eine weitere Ausnehmung 15 vorgesehen, die ebenfalls u- bzw. v-förmig ausgebildet ist und in dieser Ausführungsform etwa 90° versetzt zu den Aussparungen 13 zwischen diesen an der Außenwandung vorgesehen ist.

Wie insbesondere aus den Figuren 6, 7 und 8 hervorgeht, weist das Elastomerelement darüberhinaus eine Ausklinkung 16 auf, die die Endungen 11 gegenüber dem Sockeldurchmesser des Elastomerelementes 8 eher stumpfkegelig, konisch zulaufend erscheinen lassen, als zylindrisch. Die Ausklinkung 16 dient ebenfalls einerseits der ungehinderten Beweglichkeit der benachbarten Borstenbüschel (siehe insbesondere Fig. 4 hierzu) und andererseits der Herstellbarkeit der an das Elastomerelement angrenzenden Büschelenden.

Die Zahnbürste wird bevorzugt mit folgenden Herstellschritten und in der genannten Reihenfolge hergestellt. Zunächst wird der Kopf 1 im Kunststoffspritzgießverfahren hergestellt. Je nach dem, ob das Elastomerelement 8 separat gespritzt und anschließend am Kopf befestigt wird oder integral mit dem Kopf herstellbar sein soll, wird der Kopf 1 wahlweise mit dem Elastomerelement 8 im Zweikomponentenspritzgießverfahren hergestellt. Nach dem Verbinden des Elastomerelements 8 mit dem Kopf erfolgt die Beborstung des Kopfes, die vorliegend vorzugsweise im so genannten Ankerdrahtbestopfungsverfahren (= Stapling) erfolgt. Andere bekannte Möglichkeiten der Befestigung der Borstenbüschel oder anderer Mundpflegeelemente können alternativ genutzt werden, um Mundpflegeelemente am Kopf zu befestigen. Abschließend wird das Funktionselement, das in diesem Fall eine LED ist, im Kopf montiert. Für den Fall, dass die LED nicht im Kopf montiert werden soll, sondern mit umspritzt wird, so verändert sich die Sequenz an Herstellschritten: Spritzgießen des Kopfes mit Umspritzung des Funktionselementes, Verbinden des Elastomerelementes mit dem Kopf bzw. Anspritzen des Elastomerelementes am Kopf mit einer zweiten Kunststoffkomponente und abschließend Beborsten des Kopfes. Die Beborstung des Kopfes schließt vorzugsweise nicht nur die Befestigung der Borstenbüschel am Kopf mit ein, sondern auch die Weiterbehandlungsschritte an den Borstenenden. Diese Weiterbehandlungsschritte umfassen das Trimmen der Borstenlänge und das Endverrunden der Borstenenden. Alternativ oder wahlweise können weitere Endbehandlungsschritte der Borstenenden hinzukommen. Gemäß dieser Ausführungsform weist die Topographie der Borstenenden bei der vorliegenden Ausführungsform eine von einer planen Ebene stark abweichende Struktur auf, weil einzelne Borstenbüschel länger oder kürzer als benachbarte Borstenbüschel ausgebildet sind. Die Borstenbüschel mit einer Länge werden zur Weiterbehandlung, also zum Längentrimmen und Endverrundungsverfahren, an ihren Befestigungsorten belassen, während alle Borstenbüschel mit anderen Längen zeitweise mit so genannten Verdrängerschienen zur Seite gebogen werden. Anschließend werden die bereits endbehandelten Borstenenden mit Verdrängerschienen zur Seite gebogen und die noch unbehandelten Borstenbüschel bzgl. ihrer exakten Länge zugeschnitten und jedes Einzelfilament des Büschels endverrundet. Dabei ist zu beachten, dass das Elastomerelement 8 durch dessen Ausklinkungen und Ausnehmungen unter anderem auch dahingehend optimiert ist, dass Verdrängerschienen problemlos zur Endbehandlung der Borstenenden einsetzbar sind.

Mit Fig. 10 ist ein Längsschnitt durch den Kopf 1 gezeigt. Das Elastomerelement 8 ist in Fig. 10 nicht dargestellt, soll aber vor der Befestigung der LED mit dem Kopf und vor Befestigung der Borstenbüschel am Kopf 1 befestigt werden. Mit Fig. 10 wird die Montage des elektrisch betreibbaren Funktionselementes im Kopf 1 schematisch dargestellt. Als elektrisch betreibbares Funktionselement ist eine LED 7 vorgesehen, deren Anschlussdrähte mit einer Drahtverbindung 17 separat mit einer Umkapselung 18 versehen sind. Damit sind die elektrischen Anschlüsse der LED 7 sowie die Anschlussdrähte 17 vor eindringender Feuchtigkeit geschützt. Die LED 7 wird von hinten durch den Bürstenkopf durch einen größeren Hohlraum 19 hindurch eingelegt, so dass die Umkapselung 18 ebenfalls im Hohlraum 19 Platz findet. Der elektrische Draht 17 ist durch einen Hohlraum im Hals der Zahnbürste geführt, die den Kopf mit dem Handgriff und der darin enthaltenen Elektrik verbindet. Die LED 7 ist vorzugsweise mit einem Presssitz in der Öffnung 20 eingepresst. Gemäß dieser Ausführungsform ist sowohl die LED 7 als auch der Kopf 1 aus einem Hartkunststoff hergestellt, so dass eine geringfügig engere Dimensionierung der Öffnung 20 im Kopf gegenüber dem Außendurchmesser der LED 7 genügt, um diesen Presssitz zu gewährleisten. Alternativ ist die LED 7 oder der Kopf 1 zumindest teilweise aus Weichkunststoff wie z. B. TPE gebildet. Das Kopfmaterial kann wahlweise transparent oder transluzent ausgebildet seit. Der Kopf wird nach dem Einsetzen der LED 7 und der Umkapselung 9 von hinten mit einem Deckel 21 (siehe Figuren 4 und 5) dichtend verschlossen. Die LED kann auf jede beliebige andere Art und Weise im Kopf befestigt werden. So ist beispielsweise das Umspritzen der LED im Werkzeug, in dem der Kopf 1 gespritzt wird, eine alternative Herstellmethode. Weiterhin alternativ kann die LED eingeschweißt, eingefügt, geklebt oder eingegossen werden. Auch kann die LED (bzw. das Funktionselement) von oben (also von der Borstenebene her) oder zwischen Kopfhälften montiert werden.

Ähnliche Varianten sind für die Ausbildung des Elastomerelementes 8 möglich. Vorzugsweise ist das Elastomerelement 8 einteilig mit dem Kopf 1 gespritzt. Alternativ ist das Elastomerelement in einem weiteren Spritzgussschritt hergestellt, geklebt, gefügt, geschweißt oder geschnappt. Das Elastomerelement kann auch aus einem anderen flexiblen Material bestehen.

## Patentansprüche

1. Mundpflegeeinrichtung mit einem Handgriff und einem damit verbundenen oder verbindbaren Kopf (1) an dem Mundpflegeelemente (5), insbesondere Reinigungsborsten, vorgesehen sind, wobei an einer Außenfläche (6) des Kopfes (1) ein elektrisch betreibbares Funktionselement (7) angeordnet ist, das als lichtaussendende Quelle, Sensor oder Aktuator ausgebildet ist, wobei benachbart zum Funktionselement (7) ein Elastomerelement (8) vorgesehen ist, das um das Funktionselement (7) herum angeordnet ist, wobei das Funktionselement (7) teilweise im Kopf (1) und teilweise aus diesem vorspringend angeordnet ist, **dadurch gekennzeichnet, dass** das Elastomerelement (8) gegenüberliegend zur Außenfläche (6) des Kopfes (1) zumindest vier freigestellte Endungen (11) aufweist, die im Sockelbereich durch eine umlaufende Wandung miteinander verbunden sind, und dass zwischen den freigestellten Endungen (11) v-oder u-förmige Aussparungen (13, 14, 15) vorgesehen sind, so dass die Endungen (11) unabhängig voneinander bewegbar sind, und dass Aussparungen (13) tiefer herabreichen als das Funktionselement (7) aus der Außenfläche (6) des Kopfes (1) herausragt.

2. Mundpflegeeinrichtung nach Anspruch 1, **dadurch gekennzeichnet, dass** das Funktionselement (7) und das Elastomerelement (8) einstückig ausgebildet sind.

3. Mundpflegeeinrichtung nach zumindest einem der vorangegangenen Ansprüche, **dadurch gekennzeichnet, dass** das Funktionselement (7) benachbart und/oder zwischen den Mundpflegeelementen (5) angeordnet ist.

4. Mundpflegeeinrichtung nach zumindest einem der vorangegangenen Ansprüche, **dadurch gekennzeichnet, dass** das Funktionselement (7) als eine LED oder ein Aktuator für ein Geräusch, eine Bewegung oder eine Vibration ausgebildet ist.

5. Mundpflegeeinrichtung nach zumindest einem der vorangegangenen Ansprüche, **dadurch gekennzeichnet, dass** das Elastomerelement (8) aus thermoplastischem Elastomer und insbesondere der unmittelbar daran angrenzende Kopf (1) aus PP- oder PE-Hartkunststoff oder Copolyester oder POM ausgebildet sind.

6. Mundpflegeeinrichtung nach zumindest einem der vorangegangenen Ansprüche, **dadurch gekennzeichnet, dass** das Funktionselement (7) durch Presssitz im Kopf (1) befestigt ist.

7. Mundpflegeeinrichtung nach zumindest einem der vorangegangenen Ansprüche, **dadurch gekennzeichnet, dass** das Elastomerelement (8) zumindest 4 mm über die Außenfläche (6) des Kopfes (1) hinausragt und andere Mundpflegeelemente vorgesehen sind, deren Endungen weiter von der Außenfläche beabstandet sind, wie die Endungen des Elastomerelementes (8), wobei insbesondere eine Differenz zwischen den Endungen des Elastomerelementes und den Mundpflegeelementeendungen von 2 bis 5 mm ausgebildet ist.

8. Mundpflegeeinrichtung nach zumindest einem der vorangegangenen Ansprüche, **dadurch gekennzeichnet, dass** die Mundpflegeeinrichtung als eine manuelle oder elektrische Zahnbürste und/oder das Funktionselement (7) als LED ausgebildet ist, die im Reinigungsbereich vorspringend, insbesondere an der dem distalen Ende des Kopfes (1) zugewandten Hälfte, angeordnet ist.

9. Verfahren zur Herstellung einer Mundpflegeeinrichtung gemäß Anspruch 1, mit den Herstellschritten:
- Spritzgießen des Kopfes,
- Verbinden des Elastomerelementes mit dem Kopf,
- Beborstung des Kopfes,
- Befestigung des Funktionselementes benachbart zum Elastomerelement.

10. Verfahren nach Anspruch 9, **dadurch gekennzeichnet, dass** das Elastomerelement in einem Mehrkomponentenspritzgießverfahren am Kopf angespritzt wird.

11. Verfahren nach Anspruch 9 oder 10, **dadurch gekennzeichnet, dass** unmittelbar nach der Beborstung und vor der Befestigung des Funktionselementes eine Gruppe von Borstenbüschel seitlich weg gebogen wird, und eine andere Gruppe von Borstenbüschel in der Länge zugeschnitten und/oder endverrundet wird.

12. Verfahren nach einem der Ansprüche 9 bis 11, **dadurch gekennzeichnet, dass** das Funktionselement mittels einer Presspassung im Kopf befestigt wird.

13. Verfahren nach einem der Ansprüche 9 bis 12, **dadurch gekennzeichnet, dass** das Funktionselement im Hartkunststoff des Kopfes befestigt wird.

## Claims

1. An oral care device having a handle and a head (1) connected or connectible thereto, at which oral care elements (5) - in particular cleaning bristles - are provided, wherein an electrically operable function element (7) is arranged at an outer surface (6) of the head (1), which function element (7) is designed as a light-emitting source, sensor or actuator, wherein an elastomer element (8) is provided adjacent to the function element (7), which elastomer element (8) is arranged around the function element (7), wherein the function element (7) is arranged partly in the head (1) and partly projecting therefrom, **characterized in that**
the elastomer element (8) has at least four available ends (11) opposite the outer surface (6) of the head (1), which ends (11) are connected to each other in the base region by a circumferential wall,
and **in that**
V- or U-shaped clearances (13,14,15) are provided between the available ends (11), such that the ends (11) are movable independently of one another,
and
**in that** clearances (13) extend downward deeper than the function element (7) projects from the outer surface (6) of the head (1).

2. The oral care device according to claim 1, **characterized in that** the function element (7) and the elastomer element (8) are integrally formed in one piece.

3. The oral care device according to at least one of the preceding claims, **characterized in that** the function element (7) is arranged adjacent to and/or between the oral care elements (5).

4. The oral care device according to at least one of the preceding claims, **characterized in that** the function element (7) is an LED or an actuator for a sound, a motion or a vibration.

5. The oral care device according to at least one of the preceding claims, **characterized in that** the elastomer element (8) is made of a thermoplastic elastomer, and in particular the head (1) immediately adjoining thereto is made of PP or PE hard plastic or copolyester of POM.

6. The oral care device according to at least one of the preceding claims, **characterized in that** the function element (7) is secured in the head (1) via a press fit.

7. The oral care device according to at least one of the preceding claims, **characterized in that** the elastomer element (8) projects at least 4 mm beyond the outer surface (6) of the head (1), and other oral care elements are provided whose ends are spaced further from the outer surface than the ends of the elastomer element (8), wherein the difference between the ends of the elastomer element and ends of the oral care elements is in particular designed to be between 2 and 5 mm.

8. The oral care device according to at least one of the preceding claims, **characterized in that** the oral care device is designed as a manual or electric toothbrush, and/or the function element (7) is designed as an LED which is arranged projecting in the cleaning region, in particular at the half of the head (1) facing toward the distal end of said head (1).

9. A method for producing an oral care device according to claim 1, having the following manufacturing steps:
- injection-molding the head
- connecting the elastomer element to the head,
- tufting the head,
- securing the function element adjacent to the elastomer element.

10. The method according to claim 9, **characterized in that** the elastomer element is injection-molded at the head in a multi-component injection molding method.

11. The method according to claim 9 or 10, **characterized in that**, immediately after tufting and prior to securing the function element, one group of bristle tufts is bent away to the side and another group of bristle tufts is cut to length and/or end-rounded.

12. The method according to any of claims 9 to 11, **characterized in that**, the function element is secured in the head by means of a press fit.

13. The method according to any of claims 9 to 12, **characterized in that**, the function element is secured in the hard plastic of the head.

## Revendications

1. Dispositif de soins buccaux présentant une poignée et une tête (1) qui y est reliée ou qui peut y être reliée, sur laquelle des éléments de soins buccaux (5), en particulier des brosses de nettoyage, sont prévues, dans lequel un élément fonctionnel (7) à commande électrique est agencé au niveau d'une surface externe (6) de la tête, qui est réalisé sous forme d'une source émettrice de lumière, d'un capteur ou d'un actionneur, un élément élastomère (8) étant prévu à proximité de l'élément fonctionnel (7), qui est agencé autour de l'élément fonctionnel, dans lequel l'élément fonctionnel est disposé partiellement dans la tête (1) et partiellement en saillie par rapport à celle-ci, **caractérisé**
**en ce que** l'élément élastomère (8) présente, à l'opposé de la face externe (6) de la tête (1), au moins quatre extrémités (11) libres, qui sont reliées les unes aux autres au niveau du socle par une paroi périphérique
et **en ce que**
des évidements (13,14,15) en forme de V ou de U sont disposés entre les extrémités (11) libres de telle sorte que les extrémités (11) sont mobiles, indépendamment les unes des autres,
et
**en ce que** les évidements (13) se prolongent plus profondément que l'élément fonctionnel (7) ne sort de la surface externe (6) de la tête (1).

2. Dispositif de soins buccaux selon la revendication 1, **caractérisé en ce que** l'élément fonctionnel (7) et l'élément élastomère (8) sont réalisés en une pièce.

3. Dispositif de soins buccaux selon au moins l'une quelconque des revendications précédentes, **caractérisé en ce que** l'élément fonctionnel (7) est agencé à proximité et/ou entre les éléments (5) de soins buccaux.

4. Dispositif de soins buccaux selon au moins l'une quelconque des revendications précédentes, **caractérisé en ce que** l'élément fonctionnel (7) est conçu comme une DEL ou un actionneur pour un bruit, un mouvement ou une vibration.

5. Dispositif de soins buccaux selon au moins l'une quelconque des revendications précédentes, **caractérisé en ce que** l'élément élastomère (8) est conçu en élastomère thermoplastique et la tête (1) qui y est immédiatement adjacente est en particulier conçue en matériau synthétique dur en PP ou PE ou en copolyester ou en POM.

6. Dispositif de soins buccaux selon au moins l'une quelconque des revendications précédentes, **caractérisé en ce que en ce que** l'élément fonctionnel (7) est fixé par ajustage serré dans la tête (1).

7. Dispositif de soins buccaux selon au moins l'une quelconque des revendications précédentes, **caractérisé en ce que** l'élément élastomère (8) dépasse d'au moins 4 mm la surface externe (6) de la tête (1) et d'autres éléments de soins buccaux sont prévus, dont les extrémités sont plus éloignées de la surface externe que les extrémités de l'élément élastomère (8), dans lequel, en particulier, une différence entre les extrémités de l'élément élastomère et les extrémités des éléments de soins buccaux de 2 à 5 mm est réalisée.

8. Dispositif de soins buccaux selon au moins l'une quelconque des revendications précédentes, **caractérisé en ce que** le dispositif de soins buccaux est conçu comme une brosse à dents manuelle ou électrique et/ou **en ce que** l'élément fonctionnel (7) est conçu comme une DEL, qui est disposée dans la zone de nettoyage, en saillie, en particulier au niveau de la moitié orientée vers l'extrémité distale de la tête.

9. Procédé pour la fabrication d'un dispositif de soins buccaux selon la revendication 1, présentant les étapes de fabrication consistant à :
- mouler par injection la tête,
- relier l'élément élastomère avec la tête
- couvrir la tête de poils
- fixer l'élément fonctionnel à proximité de l'élément élastomère.

10. Procédé selon la revendication 9, **caractérisé en ce que** l'élément élastomère est moulé par injection sur la tête dans un procédé de moulage par injection à plusieurs composants.

11. Procédé selon la revendication 9 ou 10, **caractérisé en ce qu'**un groupe de touffes de poils est écarté par pliage latéral directement après le recouvrement par les poils et avant la fixation de l'élément fonctionnel et un autre groupe de touffe de poils est coupé à longueur et/ou arrondi au niveau des extrémités.

12. Procédé selon l'une quelconque des revendications 9 à 11, **caractérisé en ce que** l'élément fonctionnel est fixé au moyen d'un ajustement serré dans la tête.

13. Procédé selon l'une quelconque des revendications 9 à 12, **caractérisé en ce que** l'élément fonctionnel est fixé dans le matériau synthétique dur de la tête.
